# EUROPEAN PATENT SPECIFICATION

(11) **EP 1 747 673 B1**
(45) Date of publication and mention of the grant of the patent: **24.10.2012**
(21) Application number: 05739796.0
(22) Date of filing: 09.05.2005
(51) Int. Cl.: H04N 7/24, H04N 7/26

(54) **MULTIPLE INTEROPERABILITY POINTS FOR SCALABLE MEDIA CODING AND TRANSMISSION**
MEHRERE INTEROPERABILITÄTSPUNKTE FÜR DIE SKALIERBARE MEDIA-CODIERUNG UND -ÜBERTRAGUNG
POINTS MULTIPLES D'INTEROPERABILITE POUR CODAGE ET TRANSMISSION DE MEDIA ECHELONNABLES

(30) Priority: 12.05.2004 US 844676
(43) Date of publication of application: 31.01.2007
(60) Divisional application: 12172340.7
(73) Proprietor: Nokia Corporation, 02150 Espoo (FI)
(72) Inventor: HANNUKSELA, Miska, FIN-36110 Ruutana (FI); WANG, Ye-Kui, US-Bridgewater, NJ 08807 (US)
(74) Representative: Pursiainen, Timo Pekka
(86) International application number: PCT/IB2005/001246
(87) International publication number: WO 2005/112464

(56) References cited:
- WO-A1-2005/055605
- RULJIN F. ET AL: 'Scalable layered MPEG-2 video multicast architecture' IEEE TRANSACTIONS ON CONSUMER ELECTRONICS vol. 47, no. 1, February 2001, pages 55 - 62, XP002319821
- PIRSCH P. ET AL: 'VLSI architecture for MPEG-4' INTERNATIONAL SYMPOSIUM ON VLSI TECHNOLOGY, SYSTEMS AND APPLICATIONS 06 October 2003 - 08 October 2003, XP010675870
- WIEGAND T: "DRAFT TEXT OF FINAL DRAFT INTERNATIONAL STANDARD FOR ADVANCED VIDEO CODING (ITU-T REC. H.264/ISO/IEC 14496-10 AVC)", ISO/IEC JTC1/SC29/WG11 N5555, PATTAYA, TH, 4 June 2003 (2003-06-04),
- SCHWARZ H ET AL: "Scalable Extension of H.264/AVC", ISO/IEC JTC1/CS29/WG11 MPEG04/M10569/S03, XX, XX, 1 March 2004 (2004-03-01), pages 1-39, XP002340402,

## Description

### BACKGROUND OF THE INVENTION

### A. Field of the Invention

The present invention is directed to a device, method and system for data encoding, decoding, storage and transmission of a scalable data stream comprising at least two scalability layers.

### B. Background

Multimedia applications include local playback, streaming or on-demand, conversational and broadcast/multicast services. Interoperability is important for fast deployment and large-scale market formation of each multimedia application. To achieve high interoperability, different standards are specified.

Technologies involved in multimedia applications include, among others, media coding, storage and transmission. Media types include speech, audio, image, video, graphics and time text. Different standards have been specified for different technologies. Video coding standards include ITU-T H.261, ISO/IEC MPEG-1 Visual, ITU-T H.262 or ISO/IEC MPEG-2 Visual, ISO/IEC MPEG-4 Visual, ITU-T H.264 or ISO/IEC MPEG-4 AVC (abbreviated as AVC, AVC/H.264 or H.264/AVC in this document), and the possible future ones such as ISO/IEC MPEG-21 SVC, China AVS, ITU-T H.265, and ISO/IEC MPEG 3DAV.

Available media file format standards include ISO file format (ISO/IEC 14496-12), MPEG-4 file format (ISO/IEC 14496-14), AVC file format (ISO/IEC 14496-15) and 3GPP file format (3GPP TS 26.244).

3GPP TS 26.140 specifies the media types, formats and codecs for the multimedia messaging services (MMS) within the 3GPP system. 3GPP TS 26.234 specifies the protocols and codecs for the packet-switched streaming services (PSS) within the 3GPP system. The ongoing 3GPP TS 26.346 specifies the protocols and codecs for multimedia broadcast/multicast services (MBMS) within the 3GPP system.

Typical audio and video coding standards specify "profiles" and "levels." A "profile" is a subset of algorithmic features of the standard and a "level" is a set of limits to the coding parameters that impose a set of constraints in decoder resource consumption. Indicated profile and level can be used to signal properties of a media stream and to signal the capability of a media decoder.

Through the combination of profile and level, a decoder can declare whether it can decode a stream without trying decoding, which may cause the decoder to crash, to operate slower than real-time, and/or to discard data due to buffer overflows, if the decoder is not capable of decoding the stream. Each pair of profile and level forms an "interoperability point."

Some coding standards allow creation of scalable bit streams. A meaningful decoded representation can be produced by decoding only certain parts of a scalable bit stream. Scalable bit streams can be used for rate adaptation of pre-encoded unicast streams in a streaming server and for transmission of a single bit stream to terminals having different capabilities and/or with different network conditions. A list of other use cases for scalable video coding can be found in the ISO/IEC JTC1 SC29 WG11 (MPEG) output document N5540, "Applications and Requirements for Scalable Video Coding", the 64th MPEG meeting, March 10 to 14, 2003, Pattaya, Thailand.

Scalable coding technologies include conventional layered scalable coding techniques and fine granularity scalable coding. A review of these techniques can be found in an article by Weiping Li entitled "Overview of fine granularity scalability in MPEG-4 video standard," IEEE Transactions on Circuits and Systems for Video Technology, vol. 11, no. 3, pp. 301- 317, March 2001.

A scalable bit stream contains at least two scalability layers, the base layer and one or more enhancement layers. If one scalable bit stream contains more than one scalability layer, it then has the same number of alternatives for decoding and playback. Each layer is a decoding alternative. Layer 0, the base layer, is the first decoding alternative. Layer 1, the first enhancement layer, is the second decoding alternative, This pattern continues with subsequent layers. Typically, a lower layer is contained in the higher layers. For example, layer 0 is contained in layer 1, and layer 1 is contained in layer 2.

Available video coding standards specify buffering models and buffering parameters for the bit streams. Such buffering models are called Hypothetical Reference Decoder (HRD) or Video Buffer Verifier (VBV). A standard compliant bit stream must comply with the buffering model with a set of buffering parameters specified in the corresponding standard. Such buffering parameters for a bit stream may be explicitly or implicitly signaled. 'Implicitly signaled' means that the default buffering parameter values according to the profile and level apply. The HRD/VBV parameters are mainly used to impose constraints on the bit rate variations of compliant bit streams. A particular layer of a scalable stream may conform to a set of buffering parameters that are different from the set of buffering parameters for the scalable stream itself.

In previous systems, it has not been possible to signal the profile and level and HRD/VBV buffering parameters for a particular layer of a scalable bit stream in the bit stream itself, in the file format or through a transmission protocol. In the latest video coding standard, ITU-T H.264 (a.k.a. ISO/IEC MPEG-4 Advanced Video Coding, abbreviated as AVC), the Supplemental Enhancement Information (SEI) messages for sub-sequence layers and sub-sequences include average bit rate and frame rate but do not reveal the interoperability point, i.e., the profile and level, of a specific layer.

### SUMMARY OF THE INVENTION

The present invention allows for encoding, decoding, storage, and transmission of a scalable bit stream, wherein at least two scalability layers are present and each layer is characterized by a set of at least one property, such as profile, level and a set of at least one HRD/VBV parameter, that may be different from that of the entire stream, and wherein said a set of at least one property is signaled for at least one layer that is different from the entire stream, wherein signaling of said a set of at least one property may be in said scalable bit stream, in a file format container containing said scalable bit stream, or in a transmission or control protocol for transmission or control of at least one layer of said scalable bit stream. With the present invention, a server or client does not need to analyze the profile and level and HRD/VBV parameters of each layer of a stream by verifying the bit stream, thus reducing the computational complexity. For devices that are not capable of analyzing the layer properties from the bit stream, e.g., when the HRD implementation is required but not available, with the present invention, inclusion of device sub-unit to enable the capability is avoided.

Another exemplary embodiment of the present invention discloses a method and device for encoding a salable bit stream, wherein at least two scalability layers are present and each layer is characterized by a set of at least one property, such as profile, level and a set of at least one HRD/VBV parameter, that may be different from that of the entire stream, and wherein said a set of at least one property is signaled for at least one layer that is different from the entire stream, wherein signaling of said a set of at least one property is in said scalable bit stream. The method includes: producing a scalable bit stream to included at least two layers, each layer is characterized by a set of at least one property, such as profile, level and a set of at least one HRD/VBV parameter, that may be different from that of the entire stream, and signaling, in said scalable bit stream, said a set of at least one property, for at least one layer that is different from the entire stream, such that said a set of at least one property is readable by a without the need of analyzing said a set of at least one property or trying to decode a layer of said scalable bit stream without the knowledge of whether the device have the capability to decode the layer, which may lead to a device crash.

Another exemplary embodiment of the invention discloses a method and device for decoding a scalable bit stream, wherein at least two scalability layers are present and each layer is characterized by a set of at least one property, such as profile, level and a set of at least one HRD/VBV parameter, that may be different from that of the entire stream, and wherein said a set of at least one property is signaled for at least one layer that is different from the entire stream, wherein signaling of said a set of at least one property may be in said scalable bit stream, in a file format container containing said scalable bit stream, or in a transmission or control protocol for transmission or control of at least one layer of said scalable bit stream. The device comprises: a first component for receiving said scalable bit stream, a second component for identifying at least one layer in said scalable bit stream and reading said a set of at least one property of said at least one layer, a third component for determining whether the decoder is capable of decoding said at least one layer based on said a set of at least one property, and a fourth component for decoding said at least one layer if the third component determines that the decoder is capable of decoding said at least one layer.

Another exemplary embodiment of the invention discloses a method and device for storage of a scalable bit stream, wherein at least two scalability layers are present and each layer is characterized by a set of at least one property, such as profile, level and a set of at least one HRD/VBV parameter, that may be different from that of the entire stream. The method includes: analyzing said at least one property if not signaled in said scalable bit stream, storing said at least one property and said scalable bit stream with or without said at least one property in the bit stream to a file format container according to a file format specification.

Other features and advantages of the present invention will become apparent to those skilled in the art from the following detailed description. It should be understood, however, that the detailed description and specific examples, while indicating preferred embodiments of the present invention, are given by way of illustration and not limitation.

### BRIEF DESCRIPTION OF THE DRAWINGS

The foregoing advantages and features of the invention will become apparent upon reference to the following detailed description and the accompanying drawings, of which:

Figure 1 is a diagram illustrating signaling of profile/level and HRD/VBV parameters for a scalable bit stream according to the prior art;

Figure 2 is a diagram illustrating signaling of profile/level and HRD/VBV parameters for a scalable bit stream in an exemplary embodiment of the present invention;

Figure 3 is a diagram illustrating an encoding device in an exemplary embodiment of the present invention;

Figure 4 is a diagram illustrating a convertor device in an exemplary embodiment of the present invention; and

Figure 5 is a diagram illustrating a decoder device in an exemplary embodiment of the present invention.

### DETAILED DESCRIPTION OF EXEMPLARY EMBODIMENTS

In an exemplary embodiment, the present invention solves the problems described above by signaling a set of at least one property, such as profile, level and a set of least one HRD/VBV parameters, that may be different from that of the entire stream, for a layer of a scalable bit stream. Signaling of said a set of at least one property may be in said scalable bit stream, in a file format container containing said scalable bit stream, or in a transmission or control protocol for transmission or control of at least one layer of said scalable bit stream.

Technologies involved in multimedia applications include, among others, media coding, storage and transmission. Media types include speech, audio, image, video, graphics and time text. While video coding is described herein as an exemplary application for the present invention, the invention is not limited thereby. Those skilled in the art will recognize that the present invention can be used with all media types, not only video.

Temporally scalable coding of AVC/H.264 is beneficial from a compression efficiency point of view as compared to non-scalable coding. Furthermore, it has been shown that the base layer can be less than 50% of the total bit rate. In the level structure of AVC/H.264 it is often the case that a step from a level to the next one corresponds to up to doubling the bit rate. For example, Level 1 corresponds to 64 kbps, to-be-defiped Level 1b corresponds to 128 kbps and Level 1.1 corresponds to 192 kbps. Thus, if a scalable bit stream is coded for Level 1.1, a decoder capable of only Level 1b decoding may be able to decode at least a part of the Level 1.1 bit stream. An exemplary embodiment of the present invention allows indicating that certain parts of the bit stream fulfill the requirements of a level, where that level may be different than that of the entire bit stream.

A common group of pictures pattern is IBBP, i.e., between each intra (I) or inter (P) reference frame, there are two non-reference (B) frames. The base layer in this case consists of reference frames. In H.264/AVC, the entire bit stream would comply with the Main or Extended Profile (which includes the B picture feature), whereas the base layer bit stream may also comply with the Baseline Profile (which excludes the B picture feature). An exemplary embodiment of the present invention allows indicating that certain parts of the bit stream fulfill the requirements of a particular profile where that profile may be different than that of the entire bit stream.

An exemplary embodiment of the present invention permits other AVC profiles than Baseline profile in 3GPP multimedia applications. For example, it may be possible to allow the use of such Extended Profile bit streams, in which each temporal scalability layer composed of the all reference frames of a bit stream complies with the Baseline Profile. Thus, Baseline Profile decoders can decode the bit stream obtained by skipping non-reference frames. The invention allows to easily conclude whether a bit stream of any profile is decodable with a Baseline Profile decoder, because otherwise an analysis of the bit stream, e.g., running an HRD to the bit stream, is required.

An exemplary embodiment of the present invention permits a particular combination of profile and level and HRD/VBV parameters to be signaled for a motion-constrained slice group set indicated by the AVC motion-constrained slice group set SEI message. Thus, even though a device cannot decode the entire stream, it may know from the profile and level and HRD/VBV parameters that it can decode and playback the layer formed by the motion-constrained slice group set. After discarding the left data than the layer, some parameters, such as picture size, may be updated to make a standard compliant bit stream, though without the update the bit stream is still decodable.

The invention provides a strategy, when producing scalable bit streams, to intentionally produce layers conforming to different profile and level combinations.

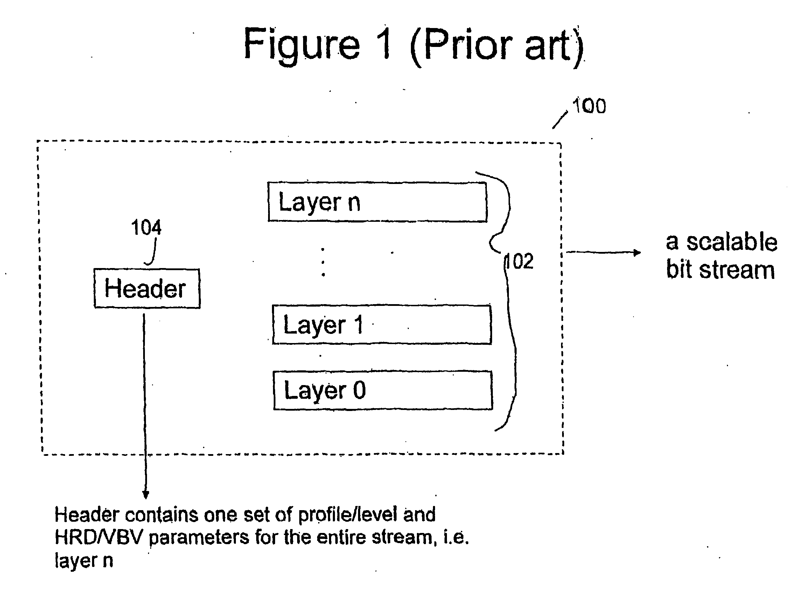

Figure 1 is a diagram illustrating signaling of profile/level and HRD/VBV parameters for a scalable bit stream 100 according to the prior art. In this scenario, the header 104 of the scalable bit stream contains one set of profile/level and HRD/VBV parameters for the entire stream. The multiple layers 102 represent the plurality of layers in the scalable bit stream.

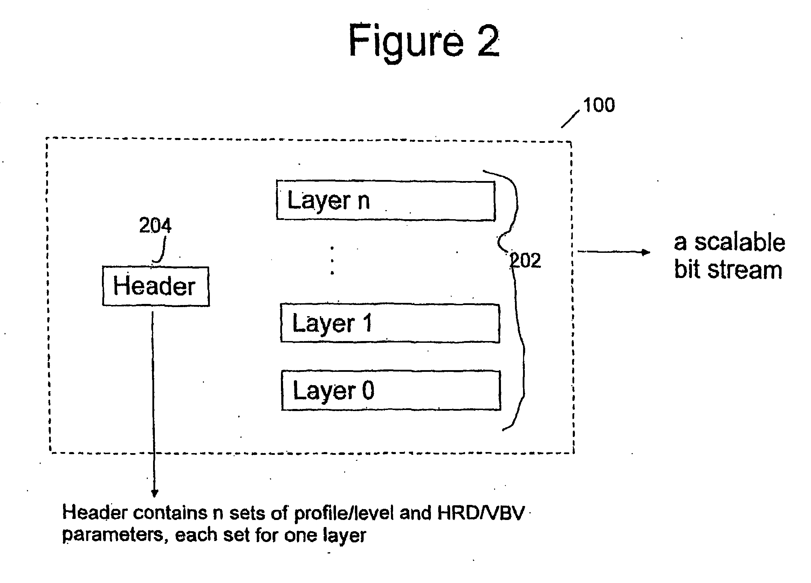

Figure 2 illustrates signaling of profile/level and HRD/VBV parameters for each layer of a scalable bit stream 200 in an exemplary embodiment of the present invention. Each layer of the scalable bit stream is characterized by the profile/level and HRD/VBV parameters signaled for the layer, thus allowing selection of a layer for decoding or transmission according to the profile/level and HRD/VBV parameters. These characterizations can be stored in header 204. The multiple layers 202 represent the plurality of layers in the scalable bit stream.

An exemplary embodiment of the present invention and the use thereof can be illustrated by the following examples. In the first example, a multimedia message is created for which the entire bit stream complies, for example, with AVC Extended Profile, Level 1b and its base layer complies with AVC Baseline Profile, Level 1. At the time of creation, the originating terminal does not know the capability of the receiving terminal. A Multimedia Messaging Service Center (MMSC), in contrast, knows the capability of the receiving terminal and is responsible of adapting the message accordingly. In this example, the receiving terminal is indeed capable of decoding AVC Baseline Profile, Level 1. Consequently, the adaptation process using the present invention requires merely stripping off the non-base-layer frames from the bit stream. Without the invention, a MMSC cannot know for sure whether the base layer complies with the target profile and level, and would have to run a analysis process, e.g., an hypothetical reference decoder, for the base layer bit stream to make the determination. Thus, the invention saves computations in the MMSC and implementation of the analysis function can be avoided. Without the invention and if the MMSC does not implement the analysis function, the above service is impossible.

In a second example of the use of the present invention, a scalable bit stream is coded and stored in a streaming server. Profile and level and possibly also the HRD/VBV parameters of each layer are signaled in the stored file. When describing the available session, the server can create an SDP description for each layer or alternative of the scalable bit stream in the same file such that a streaming client can conclude whether there is an ideal layer and choose an ideal layer for streaming playback according to the SDP descriptions. If the server has no prior knowledge on receiver capabilities, it is advantageous to create multiple SDP descriptions from the same content, and these descriptions are then called alternate. The client can then pick the description that suits its capabilities the best. If the server knows the receiver capabilities (e.g., using the UAProf mechanism specified in 3GPP TS 26.234), the server preferably chooses the most suitable profile and level for the receiver among the profiles and levels of the entire bit stream and all substreams. Without the invention, a streaming server cannot know for sure with what profiles and levels and HRD/VBV parameters the layers comply, and would have to run a analysis process, e.g., an hypothetical reference decoder, for each layer make the determination. Thus, the invention saves computations in the streaming server and implementation of the analysis function can be avoided. Without the invention and if the MMSC does not implement the analysis function, the above service is impossible.

In a third example of the use of the present invention, a stream such as that described in the second example, is multicast or broadcast to multiple terminals. The multicast/broadcast server can announce all the available layers or decoding and playback alternatives, each of which is characterized by a combination of profile and level and possibly also HRD/VBV parameters. The client can then know from the broadcast/multicast session announcement whether there is an ideal layer for it and choose an ideal layer for playback. Without the invention, a broadcast/multicast server cannot know for sure what profiles and levels and HRD/VBV parameters the layers comply with, and would have to run a analysis process, e.g., an hypothetical reference decoder, for each layer make the determination. Thus, the invention saves computations in the broadcast/multicast server and implementation of the analysis function can be avoided. Without the invention and if the MMSC does not implement the analysis function, the above service is impossible.

In a fourth example of the use of the present invention, for local playback applications, even though the entire signaled stream cannot be decoded, it is still possible to decode and enjoy part of the stream. Typically if the player gets to know that the entire stream is of a set of profile and level and HRD/VBV parameters it is not capable to decode, it just gives up the decoding and playback.

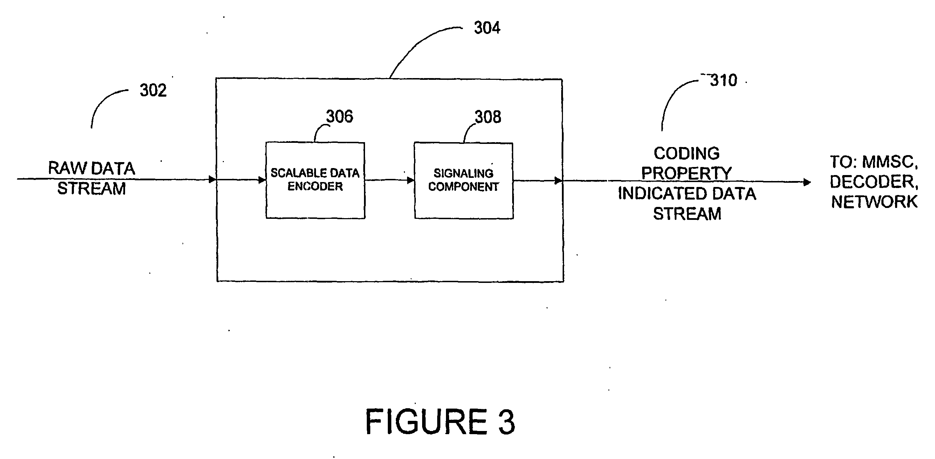

Figure 3 is a diagram illustrating an encoding device in an exemplary embodiment of the present invention. The encoding device 304 receives a raw data stream 302. The data stream is encoded and one or more layers are produced by the scalable data encoder 306 of the encoder 304. These layers are then signaled by the signaling component 308. Some of the layers may have already been signaled by the scalable data encoder 306 and the signaling component will check for such occurrences. The coding property indicated data stream 310 is output from the encoder 304, thus allowing a receiving device (MMSC or decoder) to read the signals in order to determine the coding properties of the layers of the data stream.

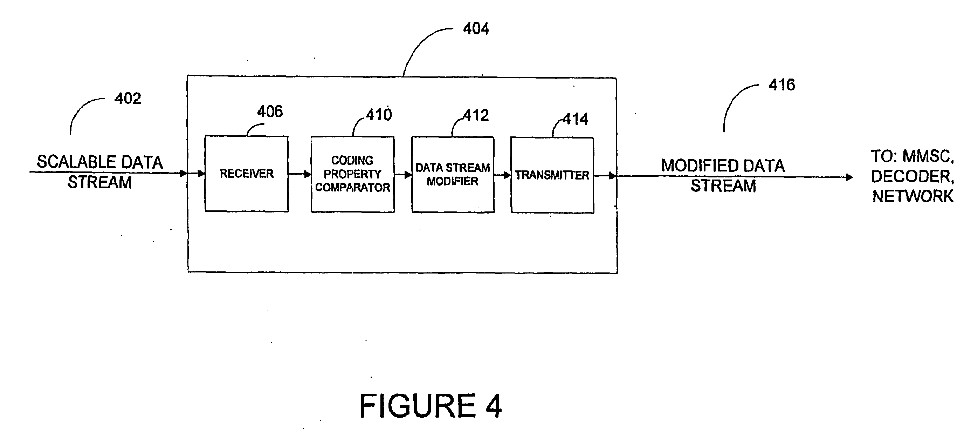

Figure 4 is a diagram illustrating an example of a converter device . The converter device 404 receives a scalable data stream 402 at receiver 406. Receiver 406 also reads the coding property indicators associated with layers of the received data stream. The coding property comparator 410 compares the coding property indicators with the already known capabilities of the decoding device or network to which the data stream is destined. Through this comparison, it determines what layers the destination device will be able to decode. The data stream is then modified in data stream modifier 412 in order to make the data stream decodable by the destination device. This may involve removing layers from the data stream that were determined in element 410 to be undecodable by the destination device. The modified data stream is then transmitted by transmitter 414. The modified data stream 416 is output from the converter 404 destined for a receiving device (MMSC or decoder).

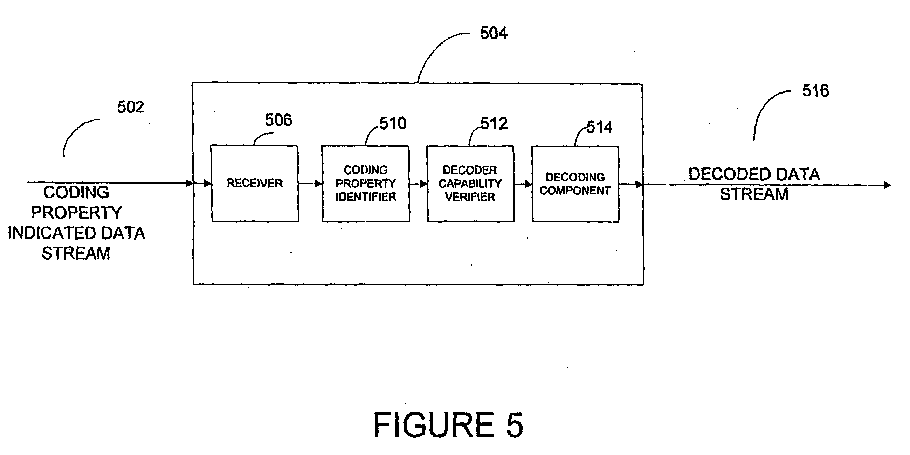

Figure 5 is a diagram illustrating a decoder in an exemplary embodiment of the present invention. The decoding device 504 receives a coding property indicated data stream 502 at receiver 504. A coding property identifier 510 identifies one or more layers in the received data stream and their corresponding coding properties. Based on the coding property of at least one of the layers, the decoder capability verifier 512 determines whether the decoder is capable of decoding that layer. If it is, it allows the decoding component 514 to proceed with decoding that layer of the data stream. If not, it prevents the decoding component 514 from attempting to decode the layer, thus avoiding a potential crash of the decoder. The decoded data stream 516 is shown in the figure as output from the decoder 504.

Signaling in bit stream

Two requirements should be fulfilled to signal the information. First, the layer with which each coding unit is associated, i.e., the coding unit to layer mapping information, must be included. Each coding unit may be a set of one or more coded pictures, slices or smaller units. Second, the pair of profile and level to which each layer conforms, i.e., the layer to profile and level mapping information, must be included. In addition, the HRD/VBV parameters and the layer characteristics such as bit rate, frame rate and picture size (i.e., picture width and height) can be included in the signaling.

Preferably, the layer to profile and level mapping information, the HRD/VBV parameters and the layer characteristics are signaled in the sequence or group of pictures (GOP) level, such as through sequence or GOP headers, sequence parameter sets, Supplemental Enhancement Information (SEI) messages, user data and other sequence level syntax. The coding unit to layer mapping information is preferably signaled in the picture or lower level, such as through picture header, slice header, network abstraction layer (NAL) header, SEI messages, user data and other picture or lower level syntax. Note that a higher-level syntax may also be included in the lower-level syntax. For example, some sequence level parameters may be included in the picture header, and typically will only be available in the picture header of the beginning pictures in a sequence.

Support of the signaling of profile and level in H.264/AVC can be achieved by the following methods.

One way is to add three additional syntax elements profile_idc, profile_compatibility_idc and level_idc in the sub-sequence layer characteristics SEI message. The modified syntax is as shown in Table 1 and described below. Of course, it would be apparent to those skilled in the art that other ways of signaling are possible and that the invention is not limited to the specific method of signaling.

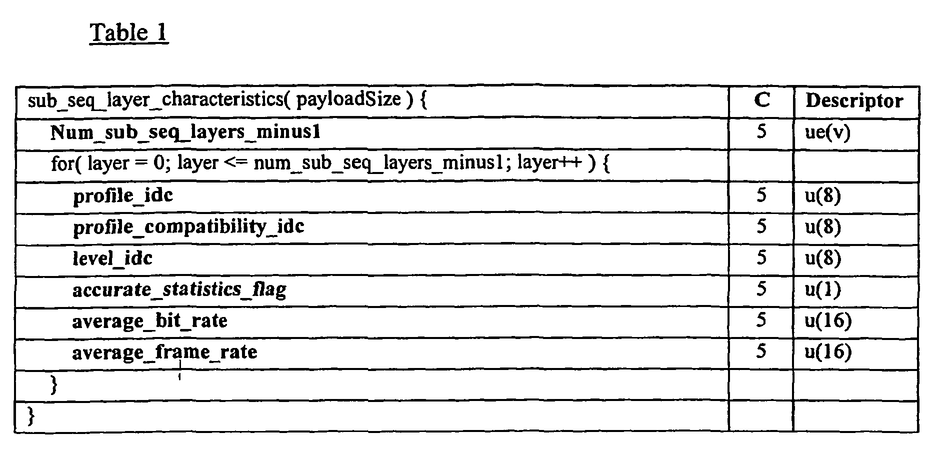

profile_idc and level_idc indicate to which profile and level the bit stream layer conforms, profile compatibility_idc is a byte, the first three bits of which are the three flags constraint_set0_flag, constraint_set1_flag, and constraint_set2_flag, respectively.

constraint_set0_flag equal to 1 indicates that the bit stream layer obeys all constraints specified in subclause A.2.1 of the AVC specification. constraint_set0_flag equal to 0 indicates that the bit stream layer may or may not obey all constraints specified in subclause A.2.1 of the AVC specification.

constraint_set1_flag equal to 1 indicates that the bit stream layer obeys all constraints specified in subclause A.2.2 of the AVC specification. constraint_set1_flag equal to 0 indicates that the bit stream layer may or may not obey all constraints specified in subclause A.2.2 of the AVC specification.

constraint_set2_flag equal to 1 indicates that the bit stream layer obeys all constraints specified in subclause A.2.3. constraint_set2_flag equal to 0 indicates that the bit stream layer may or may not obey all constraints specified in subclause A.2.3.

The values of profile_idc, level_idc, constraint_set0_flag, constraint_set1_flag and constraint_set2_flag for the highest layer must be equal to the values signaled in sequence parameter set, respectively, because the decoding of the highest layer requires decoding of the entire stream.

In addition, the sub-sequence information SEI message can be applied to provide the coding unit to layer mapping information.

Alternatively, to modify the already defined SEI message or to utilize the already defined SEI message as it is, new SEI messages can be defined for the same purposes.

A new SEI message can be defined to contain the layer to profile and level mapping information. For example, a scalability layer information SEI message can be specified as shown in Table 2 and described below:

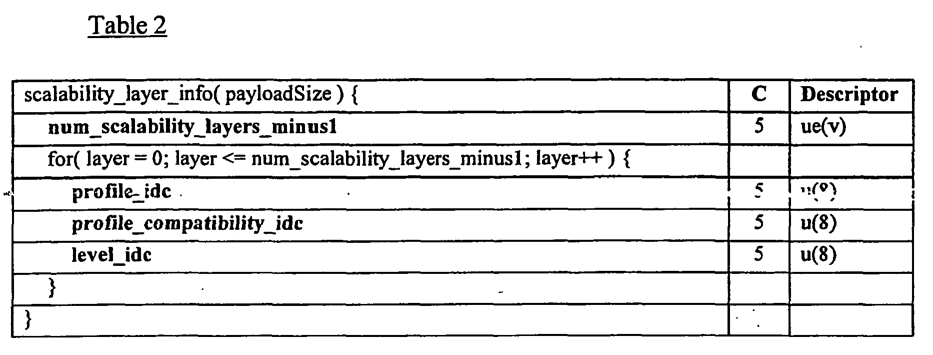

The syntax element num_scalability_layers_minus1 indicates the number of scalability layers minus 1. Other syntax elements have the same semantics as in the modified sub-sequence layer characteristics SEI message as shown in Table 1. It may also be preferable to include the bit rate and frame rate information for each layer. Such information can be added in the same way as in the sub-sequence layer characteristics SEI message, which makes the syntax of the two SEI messages the same.

Similarly, a new SEI message can be defined to contain the coding unit to layer mapping information. Table 3 and the description that follows provide an example.

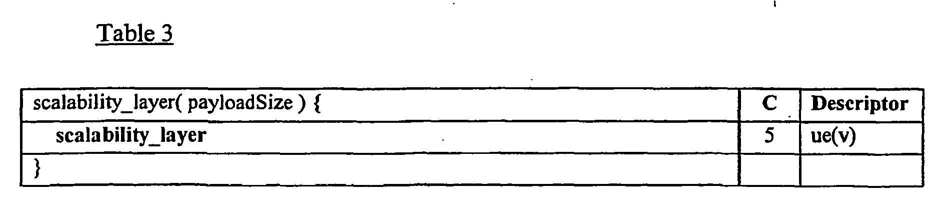

The SEI message may be associated with any coding unit, i.e., a set of one or more coded pictures, slices or smaller units.

Similar methods can be used for other video coding standards, wherein the syntax element profile_compatibility_idc may not be needed. For H.263, in the picture header there is a syntax element Enhancement Layer Number (ELNUM) indicating the layer number with which a picture is associated, there may be no need to use the sub-sequence information SEI message. For video coding standards where SEI messages are not supported, e.g., MPEG-4 Visual, user data is typically supported. In this case, all the information, including the layer to profile and level mapping information, the coding unit to layer mapping information, and the layer characteristics, can be signaled through the user data.

For another example, support of the signaling can be achieved by the following method using sequence parameter set and NAL unit header or slice header.

Some or all of the syntax elements in Table 1 or 2 are added in the sequence parameter set, and the coding unit to layer mapping information, in the form of a syntax element indicating the layer number with which the coding unit is associated, is added in either the NAL unit header or slice header. This method can be used for the ongoing video coding standard MPEG-21 SVC, for example.

For any of the above-mentioned methods, if only the layer to profile and level mapping information is present in the bit stream while the coding unit to level mapping information is not present, an implicit signaling of the coding unit to level mapping information can be applied. In this case, for example, all the reference frames/pictures form the base layer while all the non-reference frames/pictures form the enhancement layer.

HRD/VBV parameters for each layer can be signaled similarly as the layer to profile and level mapping information. For example, HRD/VBV parameters can be signaled inside the loop in Table 1 or Table 2 or sequence parameter set.

Signaling in file format

The signaling information may not be present in the bit stream for any of the following reasons: 1) the signaling is not supported by the coding technique or standard, 2) the signaling is supported but not present, 3) the file format specification disallows including of some information in the bit stream contained in the file format container, for example, the AVC file format specification disallows including of the three kinds of sub-sequence SEI messages in the bit stream stored in media tracks.

Therefore, it is important to support signaling of the information in file format. Actually, even if the information is available in the bit stream, to have the information available in file format is helpful for servers that are agnostic of media coding format.

Similar to the bit stream case, to fulfill the signaling, the coding unit to layer mapping information and the layer to profile and level mapping information must be included, and the HRD/VBV parameters and the layer characteristics such as bit rate, frame rate and picture size information can be included.

For example, the signaling can be supported in the AVC file format using the following method. It would be apparent to those skilled in the art that other ways are also possible. In this method, three additional coding points are added, AVCProfileIndication, profile_compatibility, and AVCLevelIndicaiton in the AVCLayerEntry structure. The modified syntax is as shown in Table 4 and describe below.

**Table 4**

| |
|---|
| class AVCLayerEntry() extends VisualSampleGroupEntry ('avll') |
| { |
| unsigned int(8) layerNumber; |
| unsigned int(8) accurateStatisticsFlag; |
| unsigned int(16) avgBit rate; |
| unsigned int(16) avgFrameRate; |
| unsigned int(8) AVCProfileIndication; |
| unsigned int(8) profile_compatibility; |
| unsigned int(8) AVCLevelIndication; |
| } |

Other orders of the coding points are also valid. However, adding the new ones at the end is better because file parsers that are not aware of the new added coding points can read the first ones while ignoring the rest.

AVCProfileIndication, AVCLevelIndication and profile_compatibility have the same semantics as the added syntax elements in the sub-sequence layer characteristics SEI message profile_idc, level_idc and profile_compatibility_idc, respectively.

The values of AVCProfileIndication, AVCLevelIndication and profile_compatibility for the highest layer must be equal to the corresponding values signaled in AVCDecoderConfigurationRecord structure, respectively, because the decoding of the highest layer requires decoding of the entire stream.

Similar methods can also be applied to support the signaling in the ISO file format and other file formats. If it is supported in the ISO file format, then it is naturally supported in the derived file format such as MPEG-4 file format, AVC file format and 3GPP file format. Following is a complete description of an exemplary method under the present invention for ISO file format.

To support the signaling, an ISO file should contain zero or one instance of a SampleToGroupBox (per track) with a grouping_type equal to 'layr'. This SampleToGroupBox instance represents the assignment of samples in a track to layers. An accompanying instance of the SampleGroupDescriptionBox with the same grouping type shall, if exists, contain LayerEntry sample group entries describing the layers. The LayerEntry can be defined in a similar way as the above AVCLayerEntry structure with possible modifications, e.g., removal of the profile_compatibility coding point and slight modification of the names and semantics of the coding points.

For any of the above-mentioned methods, if only the layer to profile and level mapping information is present in the file format while the coding unit to level mapping information is not present, an implicit signaling of the coding unit to level mapping information can be applied. In this case, for example, all the reference frames/pictures form the base layer while all the non-reference frames/pictures form the enhancement layer.

To support signaling of the coding unit to layer mapping formation for different layers within one sample, the sub-sample information box can be applied. The information can be signaled through either a new coding point or some of the reserved bits in the sub-sample entry table.

HRD/VBV parameters for each layer can be signaled similarly as the layer to profile and level mapping information. For example, HRD/VBV parameters can be signaled in the AVCLayerEntry() structure shown in Table 4.

Signaling in transmission and control protocols

In unicast streaming, e.g., 3GPP PSS, the server can create multiple alternatives for the same stream based on the layer to profile and level information, the HRD/VBV parameters and/or the layer characteristics information, either through multiple SDP descriptions wherein each SDP description containing one or more than one alternative, or through one SDP description containing multiple alternatives. The receiving terminal chooses one or none of the alternatives. If one alternative is chosen, the server then knows which layers should be transmitted. The following is an example of how to contain more than one alternative in one SDP description.

**Table 5**

| |
|---|
| ... |
| m=video 1024 RTP/AVP 96 |
| b=AS:128 |
| a=framerate:15 |
| a=rtpmap:96 H263-2000/90000 |
| a=fmtp:96 profile=8;level=20 |
| a=control:rtsp://mediaserver.com/movie.3gp/trackID=1 |
| a=alt-default-id:1 |
| a=alt:2:b=AS:64 |
| a=alt:2:a=framerate:5 |
| a=alt:2:a=fmtp:96 profile=0;level=10 |
| ... |

In the above example shown in Table 5, two alternatives are described in the SDP description for a H.263 video stream with the proposed signaling according to this invention. The first alternative (also the default one) is of profile 8 and level 20, with bit rate 128 kbps and frame rate 15 frame/s. The second alternative is of profile 0 and level 10, with bit rate 64 kbps and frame rate 5 frame/s.

In multicast/broadcast applications, there may be receiving terminals of different capabilities and/or in different network conditions that result in that different alternatives of a stream are ideal for different receiving terminals. In this case, it is possible to divide the receivers into different multicast/broadcast groups, and the receivers in each group share the same alternative. Using this method, the available bandwidth for each receiving terminal may be efficiently utilized.

For a multicast/broadcast group wherein all the receivers share the same alternative, similar to the unicast case, the receivers do not need to know the layer to profile and level mapping information and the coding unit to layer mapping information, because only the relevant layers are transmitted from the server side.

However, if there is more than one multicast/broadcast group, the server should present through the service announcement what alternatives are available, such that each receiver can choose one alternative service to subscribe. This can be achieved, for example, by using SDP in a similar manner as in the unicast case.

It is also possible that in one particular multicast/broadcast group one alternative with multiple layers are transmitted, while the receiver chooses to decode one of the layers and to discard the rest data. Using this method, the available bandwidth for the sending device may be efficiently utilized, because fewer streams are transmitted. In this case, with the same multicast/broadcast group, the server does not need to know the different preferences of different receiving terminals. However, it is still necessary for the server to present the alternatives information through service announcement such that the receiver can conclude whether it is able to decode any of the alternatives. In addition, it is useful for the receiver to know the coding unit to layer mapping information such that the receiver identifies the coding units to be discarded. This information can be in the bit stream and/or signaled through eternal means, e.g., though a new coding field in the RTP header.

The above two methods can also be applied together. That is, there may be multiple multicast/broadcast groups. In some of the groups, all the receivers can decode the same alternative, while in the other groups some of the receivers may discard some of the received bit stream layers. The combined method may be used to globally optimize both the efficiency of the bandwidth available in the server and the efficiencies of the bandwidths available in the receivers.

The inventors have developed the following SEI payload syntax (according to conventions used in AVC standard):

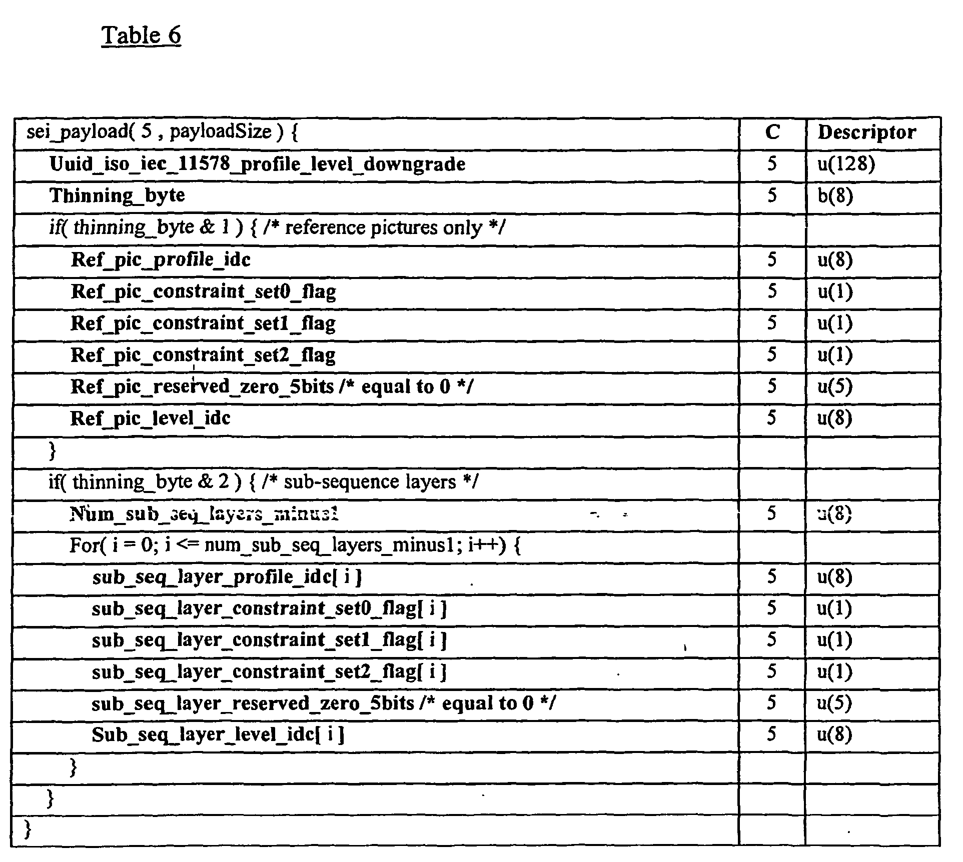

Semantics are specified as follows. When present, this SEI message shall appear in an IDR access unit. The semantics of the message are valid until the next SEI message of the same type and UUID value.

uuid_iso_iec_11578_profile_level_downgrade contains the UUID for this payload. Generation of UUID requires an IEEE 802 address of the host as well as date and time when the UUID is generated.

thinning_byte indicates the presence of the following syntax elements. The value of thinning_byte shall be in the range of 1 to 3, inclusive.

ref_pic_profile_idc, ref_pic_constraint_set0_flag, ref_pic_constraint_set1_flag, ref_pic_constraint_set2_flag, and ref_pic_level_idc indicate the profile and level compliancy of a bit stream containing only the access units containing the reference pictures of the current bit stream. The semantics of ref_pic_profile_idc, ref_pic_constraint_set0_flag, ref_pic_constraint_set1_flag, ref_pic_constraint_set2_flag, and ref_pic_level_idc are identical to the semantics of profile_idc, constraint_set0_flag, constraint_set1_flag, constraint_set2_flag, and level_idc, respectively, in the bit stream that contains the access units containing the reference pictures of the current bit stream. ref_pic_reserved_zero_5bits is unspecified.

num_sub_seq_layers_minus1 plus 1 specifies the number of sub-sequence layers in the bit stream.

When (thinning_byte & 2) is true, sub-sequence information SEI message shall be present for each primary reference picture. When the sub-sequence information SEI message is not present for a primary non-reference picture, the primary non-reference picture shall be considered to reside in sub-sequence layer num_sub_seq_layers_minus1.

sub_seq_layer_profile_idc[ i ], sub_seq_layer_constraint_set0_flag[ i ], sub_seq_layer_constraint_set1_flag[ i ], sub_seq_layer_constraint_set2_flag[ i ], and sub_seq_layer_level_idc[ i ] indicate the profile and level compliancy of a bit stream containing only the access units containing the pictures belonging to any sub-sequence layer between 0 and i, inclusive, of the current bit stream. The semantics of sub_seq_layer_profile_idc[ i ], sub_seq_layer_constraint_set0_flag[ i ], sub_seq_layer_constraint_setl_flag[ i ], sub_seq_layer_constraint_set2_flag[ i ], and sub_seq_layer_level_idc[ i ] are identical to the semantics of profile_idc, constraint_set0_flag, constraint_set1_flag, constraint_set2_flag, and level_idc, respectively, in the bit stream that contains the access units containing the pictures belonging to any sub-sequence layer between 0 and i, inclusive, of the current bit stream.

Zero or one sample-to-group box ('sbgp') for the grouping type 'lrpl' can be contained in the sample table box ('stbl') of an AVC video track. The grouping type 'lrpl' defines the grouping criterion for AVC layer profile and level information. Each of the 'lrpl' sample groups is associated to one sample group entry in the sample group description box ('sgpd'). Such a sample group entry is defined in Table 7. Each 'Irpl' sample group entry provides the profile and level information relevant to all samples in the corresponding sample group.

Samples that do not contain an IDR picture shall have the same value of group_description_index in the SampleToGroup box associated with the grouping type 'lrpl' compared to the value of group_description_index of the sample containing the previous IDR picture in sample number order.

**Table 7: AVC layer profile and level sample group entry**

| **Field** | **Type** | **Details** | **Value** |
|---|---|---|---|
| AVClayerProfLevel | AVCProfLevelStruc | Structure which holds the profile and level of AVC layers | |

AVClayerProfLevel: the structure where the AVC layer profile and level information reside.

AVCProfLevelStruc is defined as follows in Table 8.

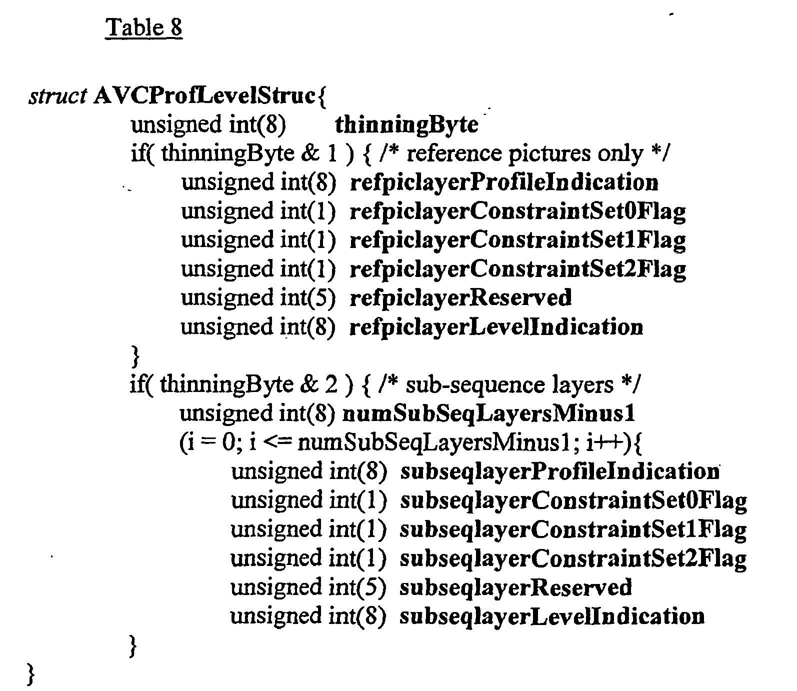

The definitions of the AVCProfLevelStruc members are as follows:

thinningByte indicates the presence of the following syntax elements. The value of thinning_byte shall be in the range of 1 to 3, inclusive.

refpiclayerProfileIndication, refpiclayerConstraintSet0Flag, refpiclayerConstraintSet1Flag, refpiclayerConstraintSet2Flag, and refpiclayerLevelIndication indicate the profile and level compliancy of a bit stream containing only the access units containing the reference pictures of the current bit stream. The semantics of refpiclayerProfileIndication, refpiclayerConstraintSet0Flag, refpiclayerConstraintSet1Flag, refpiclayerConstraintSet2Flag, and refpiclayerLevelIndication are identical to the semantics of profile_idc, constraint_set0_flag, constraint_set1_flag, constraint_set2_flag, and level_idc, respectively, in the bit stream that contains the access units containing the reference pictures of the current bit stream. refpiclayerReserved is unspecified.

When (thinningByte & 2) is true, each sample containing a primary reference picture shall be associated with a 'layr' sample group. If a sample containing a primary non-reference picture is not associated with a 'layr' sample group, the primary non-reference picture shall be considered to reside in layer numSubSeqLayersMinus1.

numSubSeqLayersMinus1 plus 1 specifies the number of sub-sequence layers in the sample group.

subseqpiclayerProfileIndication, subseqlayerConstraintSet0Flag, subseqlayerConstraintSet1Flag, subseqlayerConstraintSet2Flag, and subseqlayerLevelIndication in the ith entry of the table indicate the profile and level compliancy of a bit stream containing only the access units containing the pictures belonging to any sub-sequence layer between 0 and i, inclusive, of the sample group. The semantics of subseqpiclayerProfileIndication, subseqlayerConstraintSet0Flag, subseqlayerConstraintSet1Flag, subseqlayerConstraintSet2Flag, and subseqlayerLevelIndication are identical to the semantics of profile_idc, constraint_set0_flag, constraint_set1_flag, constraint_set2_flag, and level_idc, respectively, in the bit stream that contains the access units containing the pictures belonging to any sub-sequence layer between 0 and i, inclusive, of the sample group. subseqlayerReserved is unspecified.

As noted above, embodiments within the scope of the present invention include program products comprising computer-readable media for carrying or having computer-executable instructions or data structures stored thereon. Such computer-readable media can be any available media that can be accessed by a general purpose or special purpose computer. By way of example, such computer-readable media can comprise RAM, ROM, EPROM, EEPROM, CD-ROM or other optical disk storage, magnetic disk storage or other magnetic storage devices, or any other medium which can be used to carry or store desired program code in the form of computer-executable instructions or data structures and which can be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such connection is properly termed a computer-readable medium. Combinations of the above are also to be included within the scope of computer-readable media. Computer-executable instructions comprise, for example, instructions and data which cause a general purpose computer, special purpose computer, or special purpose processing device to perform a certain function or group of functions.

The invention is described in the general context of method steps, which may be implemented in one embodiment by a program product including computer-executable instructions, such as program code, executed by computers in networked environments. Generally, program modules include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps.

Software and web implementations of the present invention could be accomplished with standard programming techniques with rule based logic and other logic to accomplish the various database searching steps, correlation steps, comparison steps and decision steps. It should also be noted that the words "component" and "module" as used herein and in the claims is intended to encompass implementations using one or more lines of software code, and/or hardware implementations, and/or equipment for receiving manual inputs.

The foregoing description of embodiments of the present invention has been presented for purposes of illustration and description. It is not intended to be exhaustive or to limit the present invention to the precise form disclosed, and modifications and variations are possible in light of the above teachings or may be acquired from practice of the present invention. The embodiments were chosen and described in order to explain the principals of the present invention and its practical application to enable one skilled in the art to utilize the present invention in various embodiments and with various modifications as are suited to the particular use contemplated. For example, the description of embodiments of the present invention has been presented mostly for temporal scalability. However, it is applicable to all kinds of scalability, such as spatial scalability, computational scalability, and quality (signal-to-noise) scalability.

## Claims

1. A method of encoding a scalable data stream to include scalability layers having different coding properties, said method comprising:
producing two or more scalability layers of said scalable data stream, wherein each of said two or more scalability layers is **characterized by** a coding property and at least one of said two or more scalability layers has coding properties different from the other scalability layers, and
signaling each of said two or more scalability layers with said coding property such that it is readable by a decoder to determine the coding property without decoding a scalability layer of said scalable data stream, wherein said coding properties include at least one of a profile and level combination and a set of Hypothetical Reference Decoder/Video Buffer Verifier (HRD/VBV) parameters.

2. A method of encoding a scalable data stream to include scalability layers having different coding properties according to claim 1, wherein said signaling is performed within a bit stream of said scalable data stream.

3. A method of encoding a scalable data stream to include scalability layers having different coding properties according to claim 1, wherein said signaling is performed within a file format capable of storing said scalable data stream.

4. A method of encoding a scalable data stream to include scalability layers having different coding properties according to claim 1, wherein said signaling is performed within a transmission protocol capable of transmitting said scalable data stream.

5. A method of encoding a scalable data stream to include scalability layers having different coding properties according to claim 1, wherein said data stream comprises video data and wherein said profile is an advanced video codec (AVC) profile and said level is an AVC level.

6. An encoder for encoding a scalable data stream to include scalability layers having different coding properties, said encoder comprising:
a first component (306) for producing two or more scalability layers of said scalable data stream (310), wherein each of said two or more scalability layers is **characterized by** a coding property; and at least one of said two or more scalability layers has coding properties different from the other scalability layers, and
a second component (308) for signaling each of said two or more scalability layers with said coding property such that it is readable by a decoder without the need to decode the entire scalability layer, wherein said coding properties include at least one of a profile and level combination and a set of Hypothetical Reference Decoder/Video Buffer Verifier (HRD/VBV) parameters.

7. An encoder for encoding a scalable data stream to include scalability layers having different coding properties according to claim 6, wherein said second component (308) is configured such that said signaling is performed within a bit stream of said scalable data stream (310).

8. An encoder for encoding a scalable data stream to include scalability layers having different coding properties according to claim 6, wherein said second component (308) is configured such that said signaling is performed within a file format capable of storing said scalable data stream (310).

9. An encoder for encoding a scalable data stream to include scalability layers having different coding properties according to claim 6, wherein said second component (308) is configured such that said signaling is performed within a transmission protocol capable of transmitting said scalable data stream (310).

10. An encoder for encoding a scalable data stream to include scalability layers having different coding properties according to claim 6, wherein said data stream comprises video data and wherein said profile is an advanced video codec (AVC) profile.

11. A decoder (504) for decoding a scalable data stream (502) that includes scalability layers having different coding properties, said decoder comprising:
a first component (506) for receiving said scalable data stream (502) with two or more scalability layers and at least one of said two or more scalability layers has coding properties different from the other scalability layers;
a second component (510) for identifying at least one scalability layer in said scalable data stream and reading an indication associated with said scalability layer of its coding properties, wherein said coding properties include at least one of a profile and level combination and a set of Hypothetical Reference Decoder/Video Buffer Verifier (HRD/VBV) parameters;
a third component (512) for determining whether said decoder is capable of decoding said scalability layer based on said coding property; and
a fourth component (514) for decoding said scalability layer if said third component determines that the decoder is capable of decoding said scalability layer based on said coding property.

12. A decoder for decoding a scalable data stream that includes scalability layers having different coding properties according to claim 11, wherein said data stream comprises video data and wherein said coding property of said at least one scalability layer is an advanced video codec (AVC) profile.

13. A program product for encoding a scalable data stream to include scalability layers having different coding properties, said program product comprising machine-readable program code for causing, when executed, one or more devices to perform the following:
producing two or more scalability layer of said scalable data stream, wherein each of said two or more scalability layers is **characterized by** a coding property; and at least one of said two or more scalability layers has coding properties different from the other scalability layers, and
signaling each of said two or more scalability layers with said coding property such that it is readable by a decoder to determine the coding property without decoding a scalability layer of said scalable data stream, wherein said coding properties include at least one of a profile and level combination and a set of Hypothetical Reference Decoder/Video Buffer Verifier (HRD/VBV) parameters.

14. A program product for encoding a scalable data stream to include scalability layers having different coding properties according to claim 13, wherein said signaling is performed within a bit stream of said scalable data stream.

15. A program product for encoding a scalable data stream to include scalability layers having different coding properties according to claim 13, wherein said signaling is performed within a file format capable of storing said scalable data stream.

16. A program product for encoding a scalable data stream to include scalability layers having different coding properties according to claim 13, wherein said signaling is performed within a transmission protocol capable of transmitting said scalable data stream.

17. A program product for encoding a scalable data stream to include scalability layers having different coding properties according to claim 13, wherein said data stream comprises video data and wherein said profile is an advanced video codec (AVC) profile.

18. A device for encoding a scalable data stream to include scalability layers having different coding properties, said device comprising an encoder according to any of the claims 6 -10.

## Patentansprüche

1. Verfahren zum Codieren eines skalierbaren Datenstromes dergestalt, dass er Skalierbarkeitsschichten mit unterschiedlichen Codiereigenschaften enthält, wobei das Verfahren Folgendes umfasst:
Erzeugen von zwei oder mehr Skalierbarkeitsschichten des skalierbaren Datenstromes, wobei jede der zwei oder mehr Skalierbarkeitsschichten durch eine Codiereigenschaft gekennzeichnet ist und mindestens eine der zwei oder mehr Skalierbarkeitsschichten Codiereigenschaften aufweist, die sich von den Codiereigenschaften der anderen Skalierbarkeitsschichten unterscheiden, und
Signalisieren jeder der zwei oder mehr Skalierbarkeitsschichten mit der Codiereigenschaft dergestalt, dass sie durch einen Decodierer gelesen werden kann, um die Codiereigenschaft ohne Decodieren einer Skalierbarkeitsschicht des skalierbaren Datenstromes zu bestimmen, wobei die Codiereigenschaften eine Profil- und Pegel-Kombination und/oder einen Satz Hypothetical Reference Decoder/Video Buffer Verifier (HRD/VBV)-Parameter enthalten.

2. Verfahren zum Codieren eines skalierbaren Datenstromes dergestalt, dass er Skalierbarkeitsschichten mit unterschiedlichen Codiereigenschaften enthält, nach Anspruch 1, wobei das Signalisieren innerhalb eines Bitstromes des skalierbaren Datenstromes ausgeführt wird.

3. Verfahren zum Codieren eines skalierbaren Datenstromes dergestalt, dass er Skalierbarkeitsschichten mit unterschiedlichen Codiereigenschaften enthält, nach Anspruch 1, wobei das Signalisieren innerhalb eines Dateiformates ausgeführt wird, das zum Speichern des skalierbaren Datenstromes befähigt ist.

4. Verfahren zum Codieren eines skalierbaren Datenstromes dergestalt, dass er Skalierbarkeitsschichten mit unterschiedlichen Codiereigenschaften enthält, nach Anspruch 1, wobei das Signalisieren innerhalb eines Sendeprotokolls ausgeführt wird, das zum Senden des skalierbaren Datenstromes befähigt ist.

5. Verfahren zum Codieren eines skalierbaren Datenstromes dergestalt, dass er Skalierbarkeitsschichten mit unterschiedlichen Codiereigenschaften enthält, nach Anspruch 1, wobei der Datenstrom Videodaten umfasst und wobei das Profil ein Advanced Video Codec (AVC)-Profil ist und der Pegel ein AVC-Pegel ist.

6. Codierer zum Codieren eines skalierbaren Datenstromes dergestalt, dass er Skalierbarkeitsschichten mit unterschiedlichen Codiereigenschaften enthält, wobei der Codierer Folgendes umfasst:
eine erste Komponente (306) zum Erzeugen von zwei oder mehr Skalierbarkeitsschichten des skalierbaren Datenstromes (310), wobei jede der zwei oder mehr Skalierbarkeitsschichten durch eine Codiereigenschaft gekennzeichnet ist und mindestens eine der zwei oder mehr Skalierbarkeitsschichten Codiereigenschaften aufweist, die sich von den Codiereigenschaften der anderen Skalierbarkeitsschichten unterscheiden; und
eine zweite Komponente (308) zum Signalisieren jeder der zwei oder mehr Skalierbarkeitsschichten mit der Codiereigenschaft dergestalt, dass sie durch einen Decodierer ohne Notwendigkeit des Decodierens der gesamten Skalierbarkeitsschicht gelesen werden kann, wobei die Codiereigenschaften eine Profil- und Pegel-Kombination und/oder einen Satz Hypothetical Reference Decoder/Video Buffer Verifier (HRD/VBV)-Parameter enthalten.

7. Codierer zum Codieren eines skalierbaren Datenstromes dergestalt, dass er Skalierbarkeitsschichten mit unterschiedlichen Codiereigenschaften enthält, nach Anspruch 6, wobei die zweite Komponente (308) dergestalt konfiguriert ist, dass das Signalisieren innerhalb eines Bitstromes des skalierbaren Datenstromes (310) ausgeführt wird.

8. Codierer zum Codieren eines skalierbaren Datenstromes dergestalt, dass er Skalierbarkeitsschichten mit unterschiedlichen Codiereigenschaften enthält, nach Anspruch 6, wobei die zweite Komponente (308) dergestalt konfiguriert ist, dass das Signalisieren innerhalb eines Dateiformates ausgeführt wird, das zum Speichern des skalierbaren Datenstromes (310) befähigt ist.

9. Codierer zum Codieren eines skalierbaren Datenstromes dergestalt, dass er Skalierbarkeitsschichten mit unterschiedlichen Codiereigenschaften enthält, nach Anspruch 6, wobei die zweite Komponente (308) dergestalt konfiguriert ist, dass das Signalisieren innerhalb eines Sendeprotokolls ausgeführt wird, das zum Senden des skalierbaren Datenstromes (310) befähigt ist.

10. Codierer zum Codieren eines skalierbaren Datenstromes dergestalt, dass er Skalierbarkeitsschichten mit unterschiedlichen Codiereigenschaften enthält, nach Anspruch 6, wobei der Datenstrom Videodaten umfasst und wobei das Profil ein Advanced Video Codec (AVC)-Profil ist.

11. Decodierer (504) zum Decodieren eines skalierbaren Datenstromes (502), der Skalierbarkeitsschichten mit unterschiedlichen Codiereigenschaften enthält, wobei der Decodierer Folgendes umfasst:
eine erste Komponente (506) zum Empfangen des skalierbaren Datenstromes (502) mit zwei oder mehr Skalierbarkeitsschichten und mindestens eine der zwei oder mehr Skalierbarkeitsschichten Codiereigenschaften aufweist, die sich von den Codiereigenschaften der anderen Skalierbarkeitsschichten unterscheiden;
eine zweite Komponente (510) zum Identifizieren mindestens einer Skalierbarkeitsschicht in dem skalierbaren Datenstrom und Lesen eines mit der Skalierbarkeitsschicht verknüpften Hinweises auf ihre Codiereigenschaften, wobei die Codiereigenschaften eine Profil- und Pegel-Kombination und/oder einen Satz Hypothetical Reference Decoder/Video Buffer Verifier (HRD/VBV)-Parameter enthalten;
eine dritte Komponente (512) zum Bestimmen, ob der Decodierer zum Decodieren der Skalierbarkeitsschicht auf der Grundlage der Codiereigenschaft befähigt ist; und
eine vierte Komponente (514) zum Decodieren der Skalierbarkeitsschicht, wenn die dritte Komponente bestimmt, dass der Decodierer zum Decodieren der Skalierbarkeitsschicht auf der Grundlage der Codiereigenschaft befähigt ist.

12. Decodierer zum Decodieren eines skalierbaren Datenstromes, der Skalierbarkeitsschichten mit unterschiedlichen Codiereigenschaften enthält, nach Anspruch 11, wobei der Datenstrom Videodaten umfasst und wobei die Codiereigenschaft der mindestens einen Skalierbarkeitsschicht ein Advanced Video Codec (AVC)-Profil ist.

13. Programmprodukt zum Codieren eines skalierbaren Datenstromes dergestalt, dass er Skalierbarkeitsschichten mit unterschiedlichen Codiereigenschaften enthält, wobei das Programmprodukt maschinenlesbaren Programmcode umfasst, der, wenn er ausgeführt wird, ein oder mehrere Geräte veranlasst, Folgendes auszuführen:
Erzeugen von zwei oder mehr Skalierbarkeitsschichten des skalierbaren Datenstromes, wobei jede der zwei oder mehr Skalierbarkeitsschichten durch eine Codiereigenschaft gekennzeichnet ist und mindestens eine der zwei oder mehr Skalierbarkeitsschichten Codiereigenschaften aufweist, die sich von den Codiereigenschaften der anderen Skalierbarkeitsschichten unterscheiden, und
Signalisieren jeder der zwei oder mehr Skalierbarkeitsschichten mit der Codiereigenschaft dergestalt, dass sie durch einen Decodierer gelesen werden kann, um die Codiereigenschaft ohne Decodieren einer Skalierbarkeitsschicht des skalierbaren Datenstromes zu bestimmen, wobei die Codiereigenschaften eine Profil- und Pegel-Kombination und/oder einen Satz Hypothetical Reference Decoder/Video Buffer Verifier (HRD/VBV)-Parameter enthalten.

14. Programmprodukt zum Codieren eines skalierbaren Datenstromes dergestalt, dass er Skalierbarkeitsschichten mit unterschiedlichen Codiereigenschaften enthält, nach Anspruch 13, wobei das Signalisieren innerhalb eines Bitstromes des skalierbaren Datenstromes ausgeführt wird.

15. Programmprodukt zum Codieren eines skalierbaren Datenstromes dergestalt, dass er Skalierbarkeitsschichten mit unterschiedlichen Codiereigenschaften enthält, nach Anspruch 13, wobei das Signalisieren innerhalb eines Dateiformates ausgeführt wird, das zum Speichern des skalierbaren Datenstromes befähigt ist.

16. Programmprodukt zum Codieren eines skalierbaren Datenstromes dergestalt, dass er Skalierbarkeitsschichten mit unterschiedlichen Codiereigenschaften enthält, nach Anspruch 13, wobei das Signalisieren innerhalb eines Sendeprotokolls ausgeführt wird, das zum Senden des skalierbaren Datenstromes befähigt ist.

17. Programmprodukt zum Codieren eines skalierbaren Datenstromes dergestalt, dass er Skalierbarkeitsschichten mit unterschiedlichen Codiereigenschaften enthält, nach Anspruch 13, wobei der Datenstrom Videodaten umfasst und wobei das Profil ein Advanced Video Codec (AVC)-Profil ist.

18. Gerät zum Codieren eines skalierbaren Datenstromes dergestalt, dass er Skalierbarkeitsschichten mit unterschiedlichen Codiereigenschaften enthält, wobei das Gerät einen Codierer nach einem der Ansprüche 6-10 enthält.

## Revendications

1. Procédé de codage d'un flux de données échelonnables pour inclure des couches d'échelonnabilité ayant des propriétés de codage différentes, ledit procédé comprenant :
la production de deux ou plusieurs couches d'échelonnabilité dudit flux de données échelonnables, chacune desdites deux couches d'échelonnabilité ou plus étant **caractérisée par** une propriété de codage et au moins une des deux couches d'échelonnabilité ou plus ayant des propriétés de codage différentes des autres couches d'échelonnabilité ; et
la signalisation de chacune desdites deux couches d'échelonnabilité ou plus avec ladite propriété de codage de telle sorte qu'elle soit lisible par un décodeur pour déterminer la propriété de codage sans décoder une couche d'échelonnabilité dudit flux de données échelonnables, lesdites propriétés de codage incluant au moins un des éléments suivants : une combinaison de profil et de niveau et un ensemble de paramètres de décodeur de référence hypothétique/vérificateur de tampon vidéo (DRH/VTV).

2. Procédé de codage d'un flux de données échelonnables pour inclure des couches d'échelonnabilité ayant des propriétés de codage différentes selon la revendication 1, dans lequel ladite signalisation est effectuée à l'intérieur d'un flux de bits dudit flux de données échelonnables.

3. Procédé de codage d'un flux de données échelonnables pour inclure des couches d'échelonnabilité ayant des propriétés de codage différentes selon la revendication 1, dans lequel ladite signalisation est effectuée à l'intérieur d'un format de fichier capable de stocker ledit flux de données échelonnables.

4. Procédé de codage d'un flux de données échelonnables pour inclure des couches d'échelonnabilité ayant des propriétés de codage différentes selon la revendication 1, dans lequel ladite signalisation est effectuée à l'intérieur d'un protocole de transmission capable de transmettre ledit flux de données échelonnables.

5. Procédé de codage d'un flux de données échelonnables pour inclure des couches d'échelonnabilité ayant des propriétés de codage différentes selon la revendication 1, dans lequel ledit flux de données comprend des données vidéo et dans lequel ledit profil est un profil codec vidéo avancé (CVA) et ledit niveau est un niveau de CVA.

6. Codeur pour coder un flux de données échelonnables pour inclure des couches d'échelonnabilité ayant des propriétés de codage différentes, ledit codeur comprenant :
un premier composant (306) pour produire deux couches d'échelonnabilité ou plus dudit flux de données échelonnables (310), chacune desdites deux couches d'échelonnabilité ou plus étant **caractérisée par** une propriété de codage et au moins une desdites deux couches d'échelonnabilité ou plus ayant des propriétés de codage différentes des autres couches d'échelonnabilité ; et
un second composant (308) pour signaler chacune desdites deux couches d'échelonnabilité ou plus avec ladite propriété de codage de telle sorte qu'elle soit lisible par un décodeur sans le besoin de décoder l'ensemble de la couche d'échelonnabilité, lesdites propriétés de codage incluant au moins un des éléments suivants : une combinaison de profil et de niveau et un ensemble de paramètres de décodeur de référence hypothétique/vérificateur de tampon vidéo (DRH/VTV).

7. Codeur pour coder un flux de données échelonnables pour inclure des couches d'échelonnabilité ayant des propriétés de codage différentes selon la revendication 6, dans lequel ledit second composant (308) est configuré de telle sorte que ladite signalisation est effectuée à l'intérieur d'un flux de bits dudit flux de données échelonnables (310).

8. Codeur pour coder un flux de données échelonnables pour inclure des couches d'échelonnabilité ayant des propriétés de codage différentes selon la revendication 6, dans lequel ledit second composant (308) est configuré de telle sorte que ladite signalisation est effectuée à l'intérieur d'un format de fichier capable de stocker ledit flux de données échelonnables (310).

9. Codeur pour coder un flux de données échelonnables pour inclure des couches d'échelonnabilité ayant des propriétés de codage différentes selon la revendication 6, dans lequel ledit second composant (308) est configuré de telle sorte que ladite signalisation est effectuée à l'intérieur d'un protocole de transmission capable de transmettre ledit flux de données échelonnables (310).

10. Codeur pour coder un flux de données échelonnables pour inclure des couches d'échelonnabilité ayant des propriétés de codage différentes selon la revendication 6, dans lequel ledit flux de données comprend des données vidéo et dans lequel ledit profil est un profil codec vidéo avancé (CVA).

11. Décodeur (504) pour décoder un flux de données échelonnables (502) qui inclut des couches d'échelonnabilité ayant des propriétés de codage différentes, ledit décodeur comprenant :
un premier composant (506) pour recevoir ledit flux de données échelonnables (502) avec deux couches d'échelonnabilité ou plus (502) et au moins une desdites deux couches d'échelonnabilité ou plus ayant des propriétés de codage différentes des autres couches d'échelonnabilité ; et
un deuxième composant (510) pour identifier au moins une couche d'échelonnabilité dans ledit flux de données échelonnables et lire une indication associée à ladite couche d'échelonnabilité de ses propriétés de codage, lesdites propriétés de codage incluant au moins un des éléments suivants : une combinaison de profil et de niveau et un ensemble de paramètres de décodeur de référence hypothétique/vérificateur de tampon vidéo (DRH/VTV) ;
un troisième composant (512) pour déterminer si ledit décodeur est capable de décoder ladite couche d'échelonnabilité sur la base de ladite propriété de codage ; et
un quatrième composant (514) pour décoder ladite couche d'échelonnabilité si ledit troisième composant détermine que le décodeur est capable de décoder ladite couche d'échelonnabilité sur la base de ladite propriété de codage.

12. Décodeur pour décoder un flux de données échelonnables qui inclut des couches d'échelonnabilité ayant des propriétés de codage différentes selon la revendication 11, dans lequel ledit flux de données comprend des données vidéo et dans lequel ladite propriété de codage de ladite au moins une couche d'échelonnabilité est un profil codec vidéo avancé (CVA).

13. Produit de programme pour coder un flux de données échelonnables pour inclure des couches d'échelonnabilité ayant des propriétés de codage différentes, ledit produit de programme comprenant un code de programme lisible par machine pour amener, lorsqu'il est exécuté, un ou plusieurs dispositifs à effectuer les opérations suivantes :
la production de deux couches d'échelonnabilité ou plus dudit flux de données échelonnables, chacune desdites deux couches d'échelonnabilité ou plus étant **caractérisée par** une propriété de codage et au moins une des deux couches d'échelonnabilité ou plus ayant des propriétés de codage différentes des autres couches d'échelonnabilité ; et
la signalisation de chacune desdites deux couches d'échelonnabilité ou plus avec ladite propriété de codage de telle sorte qu'elle soit lisible par un décodeur pour déterminer la propriété de codage sans décoder une couche d'échelonnabilité dudit flux de données échelonnables, lesdites propriétés de codage incluant au moins un des éléments suivants : une combinaison de profil et de niveau et un ensemble de paramètres de décodeur de référence hypothétique/vérificateur de tampon vidéo (DRH/VTV).

14. Produit de programme pour coder un flux de données échelonnables pour inclure des couches d'échelonnabilité ayant des propriétés de codage différentes selon la revendication 13, dans lequel ladite signalisation est effectuée à l'intérieur d'un flux de bits dudit flux de données échelonnables.

15. Produit de programme pour coder un flux de données échelonnables pour inclure des couches d'échelonnabilité ayant des propriétés de codage différentes selon la revendication 13, dans lequel ladite signalisation est effectuée à l'intérieur d'un format de fichier capable de stocker ledit flux de données échelonnables.

16. Produit de programme pour coder un flux de données échelonnables pour inclure des couches d'échelonnabilité ayant des propriétés de codage différentes selon la revendication 13, dans lequel ladite signalisation est effectuée à l'intérieur d'un protocole de transmission capable de transmettre ledit flux de données échelonnables.

17. Produit de programme pour coder un flux de données échelonnables pour inclure des couches d'échelonnabilité ayant des propriétés de codage différentes selon la revendication 13, dans lequel ledit flux de données comprend des données vidéo et dans lequel ledit profil est un profil codec vidéo avancé (CVA).

18. Dispositif pour coder un flux de données échelonnables pour inclure des couches d'échelonnabilité ayant des propriétés de codage différentes, ledit dispositif comprenant un codeur selon l'une quelconque des revendications 6 à 10.
